# EUROPÄISCHE PATENTANMELDUNG

(11) **EP 1 836 964 A2**
(43) Veröffentlichungstag der Anmeldung: **26.09.2007**
(21) Anmeldenummer: 07450027.3
(22) Anmeldetag: 15.02.2007
(51) Int. Cl.: A61B 7/00

(54) **Verfahren zur Ermittlung von interpretierbaren Daten von physiologischen Geräuschen oder Vibrationen**

(30) Priorität: 22.03.2006 AT 2252006
(71) Anmelder: Florian, Fritz, A-8010 Graz (AT)
(72) Erfinder: Florian, Fritz, A-8010 Graz (AT)
(74) Vertreter: Haffner, Thomas M.

(57) **Zusammenfassung**

Bei einem Verfahren zur Ermittlung von interpretierbaren Daten von physiologischen und pathologischen Geräuschen bzw. Vibrationen von Gelenken, Muskeln oder Sehnen von Menschen oder Tieren wird ein elektromechanischer Schallwandler an die Geräusch- bzw. Vibrationsquelle herangeführt. Die elektrischen Signale des Wandlers werden einem Verstärker zugeführt und die verstärkten Signale werden einer Analyse zur Bestimmung der Frequenzen und/oder der Intensität des gemessenen Signals unterworfen. Die Vorrichtung zur Durchführung des Verfahrens zeichnet sich dadurch aus, dass Körperschallsensoren mit einem Verstärker und/oder einem Frequenzanalysator verbunden sind und dass die Auswertungsergebnisse des Frequenzanalysators als Spektren speicherbar und/oder ausdruckbar sind.

## Beschreibung

Die Erfindung bezieht sich auf ein Verfahren zur Ermittlung von interpretierbaren Daten von physiologischen Geräuschen oder Vibrationen von Gelenken, Muskeln oder Sehnen von Menschen und Tieren sowie auf eine Vorrichtung zur Durchführung dieses Verfahrens. Physiologische Geräusche bezeichnen nachfolgend insbesondere auch Vibrationen, wobei physiologische Geräusche auch pathologische Geräusche und Vibrationen umfassen.

Akustische Schallgeber und akustische Sensoren werden im Ultraschallbereich für bildgebende Verfahren in der Medizin und Gesundheitsvorsorge eingesetzt. Audiofrequenzanalytische Messungen niederfrequenter bzw. hörbarer Frequenzen spielen in der medizinischen Diagnostik bisher nur eine untergeordnete Bedeutung. Im Zusammenhang mit Hörschäden wird das subjektive Lautstärkeempfinden eines Patienten bei definierten akustischen Frequenzen spektral ausgewertet und einer Diagnose zugrunde gelegt.

Geräusche sind nichtperiodische Schallereignisse mit ungeregeltem Zeitverlauf, denen keine Tonhöhe zugeordnet werden kann. Geräusche bezeichnen alle Tongemische, die sich aus sehr vielen Einzeltönen zusammensetzen, wobei zwischen den Einzelfrequenzen kein gesetzmäßiger Zusammenhang besteht. Amplituden, Phasen und Frequenzen von Geräuschen schwanken in der Regel statistisch. Das Spektrum eines Geräusches ist zumeist ein kontinuierliches, wobei durch periodische Vorgänge Einzeltöne auftreten können, die dem breitbandigen Geräuschanteil überlagert sind. Einzeltöne dieser Art erhöhen im akustischen Sinn die Störwirkung eines Geräusches beträchtlich.

Aus umfangreichen Untersuchungen hat sich nun gezeigt, dass Gelenke, Muskel oder Sehnen überlicherweise vorwiegend gleichmäßige niederfrequente leise physiologische Mikrosignale im Bereich von 1 Hz bis 100 Hz produzieren. Prinzipiell ist es möglich, derartige Signale oszilloskopisch darzustellen. Derartige Signale sind aber in aller Regel nicht hörbar.

Die Erfindung zielt nun darauf ab, aus der Ermittlung von physiologischen Geräuschen interpretierbare Daten zu schaffen, welche die Möglichkeit bieten, zwischen erkrankten und/oder verletzten Gelenken, Muskeln oder Sehnen und gesunden Gelenken, Muskeln oder Sehnen zu unterscheiden. Erfindungsgemäß wird zu diesem Zweck das eingangs genannte Verfahren so durchgeführt, dass ein elektromechanischer Schallwandler an die Geräuschquelle herangeführt wird, dass die elektrischen Signale des Wandlers einem Verstärker zugeführt und dass die verstärkten Signale einer Analyse zur Bestimmung der Frequenzen und/oder der Intensität des gemessenen Signals unterworfen werden. Die in aller Regel unhörbaren Geräusche bzw. Vibrationen von Gelenken, Muskeln oder Sehnen müssen mit entsprechend empfindlichen elektrischen Schallwandlern bzw. Mikrophonen erfasst werden und in hohem Maße verstärkt werden, wobei die auf diese Weise erzielten Signale einer entsprechenden Analyse bzw. Aufbereitung unterworfen werden müssen, um nun pathologische Veränderungen sicher erkennen zu können. Die Analyse zur Bestimmung der Frequenz und/oder der Intensität des gemessenen Signals dient hierbei dazu, zu erkennen, ob die üblicherweise niederfrequenten und einem gesunden Gelenk bzw. Muskel oder Sehne zuordenbaren Signale in einen höherfrequenten Bereich verschoben wurden oder aber die Intensität derartiger Signale gegenüber gesunden Gelenken, Muskeln oder Sehnen größer ist. Derartige aus Vergleichsmessungen gewonnene Daten von physiologischen Geräuschen können somit aufgrund der Unterschiedlichkeit der pathologischen Mikrosignale rasch Aufschluss auf das Stadium einer Gelenk-, Muskel- oder Sehnenerkrankung oder -verletzung bieten. In der Regel reicht für eine derartige Bereitstellung interpretierbarer Daten eine Zweikanalanalyse aus, wobei bei Untersuchungen von Gelenken, Muskeln oder Sehnen jeweils ein Kanal einem bzw. einer gesunden Gelenk, Muskel oder Sehne und der zweite Kanal einem bzw. einer zu untersuchenden Gelenk, Muskel oder Sehne zugeordnet werden kann. Prinzipiell kann auf diese Weise eine Reihe von pathologischen Veränderungen bereits zu einem Zeitpunkt erfasst werden, zu welchen Schmerzempfindungen noch nicht die pathologischen Veränderungen signalisieren. Dies gilt beispielsweise für rheumatische Gelenk-, Muskel- und Sehnenerkrankungen im Frühstadium ebenso wie für prä- oder posttherapeutische Verlaufkontrollen bei Sehnenscheidenentzündungen sowie prä- oder postoperativen Untersuchungen zum Nachweis der Stabilität von Gelenken. In besonders einfacher Weise wird das erfindungsgemäße Verfahren hierbei so durchgeführt, dass gemeinsam mit den erfassten Signalen über einen definierten Zeitraum eine Erfassung der Winkelstellung und/oder der Bewegungsrichtung von Gelenken vorgenommen wird. Speziell eine derartige Aufbereitung der interpretierbaren Daten unter gleichzeitiger Erfassung von Winkelstellung, Bewegungsrichtung und Bewegungsgeschwindigkeit, beispielsweise durch Videoaufzeichnung mit mehreren Audiospuren, erlaubt es, Geräuschpeaks oder verstärkt auftretende Einzelfrequenzen mit dem jeweiligen Schmerzempfinden zu korrelieren. Mit Vorteil wird hierbei das Verfahren so durchgeführt, dass die bei der Analyse ermittelten Spektren gespeichert und mit zu verschiedenen Zeitpunkten gespeicherten Spektren verglichen werden. Eine derartige Verfahrensführung erlaubt es unter anderem auch, Aussagen darüber zu treffen, ob die Angaben eines Patienten mit der Realität übereinstimmen, oder ob diese auf Einbildung oder mutwillig falschen Angaben beruhen. Mit besonderem Vorteil wird so vorgegangen, dass die gemessenen Daten mit dem von der Person, deren Daten ermittelt wurden, artikulierten Schmerzempfinden verglichen werden, wobei aus einer derartigen Langzeitanalyse tendenziell Änderungen erkannt werden können, welche noch keinen pathologischen Befund zur Folge hätten. Eine derartige Frühdiagnose kann somit beispielsweise rheumatische Beschwerden in statu nascendi erkennen lassen.

Anwendungsgebiete der erfindungsgemäßen Verfahrensführung reichen von orthopädischen Therapiekontrollen über arbeits- und sportmedizinische Untersuchungen bis zur Präventiv- und Akutmedizin.

Mit Rücksicht auf die überaus leisen zu messenden Signale wird das Verfahren mit Vorteil so durchgeführt, dass die vom Schallwandler gelieferten Signale um mehr als 180 dB, vorzugsweise mehr als 200 dB, verstärkt werden und einem Kopfhörer, Lautsprecher und/oder einem Oszilloskop zugeführt werden.

Prinzipiell sind für die Ermittlung interpretierbarer Daten einige Besonderheiten zu berücksichtigen. Für die erfolgreiche Anordnung von Schallaufnehmern ist anatomisches Wissen Grundvoraussetzung. Eindeutige physiologische oder pathologische Mikrogeräusche bzw. Vibrationen entstehen aber nur, wenn der Patient bzw. ein Tier bestimmte Bewegungen mit hoher Präzision ausführt. Ein bestimmter Rhythmus der Bewegungen ist für vergleichende Kontrolluntersuchungen besonders wichtig. Langsame Bewegungen eines Gelenks bzw. Kontraktionen von Muskeln oder Sehnenbewegungen produzieren nicht immer eindeutige Mikrogeräuschinformationen. Mit Vorteil werden seitenvergleichende Zweikanaluntersuchungen vorgenommen, um aufgrund von Differenzialdiagnosen rasch die relevanten Unterschiede erkennen zu können.

Prinzipiell kann ein empfindlicher Körperschallsensor nur in möglichst vibrationsfreien Untersuchungsräumen zum Einsatz gelangen, da ja auch äußerst niederfrequente Signale korrekt ausgewertet werden sollen.

Physiologische Geräusche im Infraschallbereich sind beim gesunden Gelenk, Muskel oder der gesunden Sehne genaugenommen keine Mikrogeräusche sondern Vibrationen, die weit unter der menschlichen Hörschwelle liegen und bis - 180 dB reichen. Wenn derartige Mikrosignale um ca. 200 dB verstärkt werden, können sie hörbar werden, sobald die Frequenzen in den Bereich der hörbaren Frequenzen verschoben sind.

Prinzipiell breiten sich derartige Geräuschwellen in unterschiedlichen Medien mit unterschiedlichen Geschwindigkeiten aus. Während die übliche Ausbreitungsgeschwindigkeit in der Luft mit 333 m/sec der üblichen Schallgeschwindigkeit entspricht, ist die Ausbreitungsgeschwindigkeit in Wasser wesentlich höher und kann etwa 1,4 km/sec betragen. In der Muskulatur kann sich diese Geschwindigkeit auf 1,5 bis 1,6 km/sec erhöhen, wohingegen die Knochenleitung noch höhere Ausbreitungsgeschwindigkeiten zur Folge hat, welche zwischen 2,7 und 4 km/sec liegen.

Die üblicherweise auftretenden Frequenzen im hier relevanten Geräuschspektrum liegen zwischen 1 und 800 Hz, wobei die gesunden und die pathologischen Geräusche üblicherweise den Bereich zwischen unhörbaren - (minus) 130 dB und selten hörbaren + (plus) 20 dB umfassen. Mikromuskelgeräusche entstehen hierbei durch Kontraktion und Reibung von Muskelfasern, die aus Myofibrillen bestehen, wobei der Muskel die Mikrokontraktionsgeräusche mit der oben genannten Geschwindigkeit zur Hautoberfläche leitet. Mikrosehnengeräusche, Mikromuskelgeräusche bzw. -vibrationen entstehen, wenn bewegte Sehnen an den Sehnenscheiden reiben. Sehnenreibungsgeräusche werden entlang der Sehne zur Hautoberfläche weitergeleitet. Gelenksgeräusche können viele pathologische Ursachen haben. Der natürliche Reibungswiderstand gleitender Kontaktflächen kann insbesondere durch einen Gelenkserguss, durch Verkalkungen oder Fibrinablagerungen od.dgl. vergrößert werden. Der Geräuschrhythmus, das Frequenzspektrum und der Schallpegel derartiger Geräusche ändern sich bei schleichend beginnenden Erkrankungen von Gelenken, Muskeln oder Sehnen bereits sehr früh, sodass pathologische Mikrogeräusche zu einem äußerst frühen Zeitpunkt erkannt werden können. Lediglich Gelenksergüsse oder Gelenksblockaden stellen hier insofern eine Ausnahme dar, als ein pathologischer Befund vom Ausbleiben von Geräuschen abhängig werden kann.

Die erfindungsgemäße weitere Verfahrensführung im Anschluss an die Ermittlung der interpretierbaren Daten erfolgt in besonders vorteilhafter Weise daher so, dass die gemessenen Daten in Frequenzgruppen unterteilt ausgewertet werden, wobei Signale bzw. Peaks bei Frequenzen im Infraschallbereich als unkritisch eingestuft und Signale bei Frequenzen im hörbaren Niederfrequenzbereich, insbesondere zwischen 16 Hz und 800 Hz, auf pathologische Ursachen untersucht bzw. mit pathologischen Ursachen korreliert werden.

Die erfindungsgemäße Vorrichtung zur Durchführung dieses Verfahrens ist im wesentlichen dadurch gekennzeichnet, dass Körperschallsensoren mit einem Verstärker und/oder einem Frequenzanalysator verbunden sind und dass die Auswertungsergebnisse des Frequenzanalysators als Spektren speicherbar und/oder ausdruckbar sind. Vorzugsweise werden hierbei jeweils wenigstens zwei Körperschallsensoren bzw. Mikrophone eingesetzt, wobei in besonders einfacher Weise der Körperschallsensor von zwei Kondensatormikrophonen gebildet ist.

Die für die Interpretation erforderliche Analyse wird vorrichtungsmäßig mit Vorteil so gelöst, dass die Frequenzanalyse über einen Frequenzbereich von Infraschall bis etwa 10 kHz eingestellt ist. Zur gleichzeitigen Erfassung von Winkelstellung und/oder Bewegungsrichtung von Gelenken ist die Vorrichtung mit Vorteil derart weitergebildet, dass eine Videokamera vorgesehen ist, deren Signale zeitgleich mit der Messung der Signale der Körperschallsensoren aufgezeichnet und/oder wiedergebbar ist.

Um die im vorliegenden Fall relevanten Frequenzen sicher erfassen zu können, werden erfindungsgemäß Sensoren gewählt, welche einen Frequenzgang zwischen 1 Hz und 10 kHz erfassen.

In schematisch vereinfachter Weise kann hierbei zusammenfassend festgehalten werden, dass gesunde Gelenks-, Muskel- bzw. Sehnengeräusche aus Infraschall- und niederfrequenten Schallwellen bestehen, wohingegen pathologische Mikrogeräusche in einem Spektrum liegen, das sich üblicherweise bis etwa 400 Hz und in seltenen Fällen über 800 Hz erstreckt.

Die Position der jeweiligen Sensoren muss den anatomischen Erfordernissen angepasst vorgenommen werden, wobei die Mikrophone mit entsprechenden Stativen an die Messstellen herangeführt werden können oder aber in besonders einfacher Weise mit Klebestreifen an der Haut festgelegt werden können. Prinzipiell eignet sich hierfür besonders weiches, elastisches Verbandsmaterial, das keine akustischen Störgeräusche produziert. Die genaue Position wird in Abhängigkeit von der jeweiligen Fragestellung gewählt. Im Fall von Sensoren im Bereich der Kiefergelenke können diese Sensoren vom jeweiligen Patienten selbst an die Kiefergelenke angedrückt werden.

Die Halswirbelsäule besteht aus einer großen Anzahl verschiedener Gelenke. Besonders günstige Messergebnisse bzw. interpretierbare Daten lassen sich hierbei durch Fixation bzw. Orientierung der Schallwandler in Höhe des zweiten und siebenten Halswirbeldornfortsatzes gewinnen.

Gesunde Schultergelenke produzieren bei Bewegungen nahezu keine hörbaren Geräusche bzw. Vibrationen. Mechanisch stark beanspruchte Schultergelenke erkranken in aller Regel unbemerkt. Diagnosen erforderten in der Vergangenheit Röntgenübersichts- und -funktionsaufnahmen, Ultraschall-, CT- oder MR-Untersuchungen. Die erfindungsgemäße Geräuschanalyse erlaubt hier im Vorfeld eine audiovisuelle Sofortinformation, wobei laute, raue Schultergeräusche Warnsignale einer beginnenden oder chronischen Schultererkrankungen sind. In der Folge durchgeführte ergänzende Untersuchungen können Folge- und Spätschäden wirkungsvoll verhindern. Ein besonderer Vorteil der erfindungsgemäßen Messmethoden besteht aber auch darin, dass die Wirkung von Therapien rasch und objektiv überprüft werden kann. Beispielsweise deutet eine Rückbildung von Reibegeräuschen bzw. Reibevibrationen darauf hin, dass ein Gelenk wieder gesund wird und dass die vorgenommene Therapie daher erfolgreich verläuft. Im Fall der Untersuchung von Schultergelenken ist die gleichzeitige Erhebung einer Schmerzanamnese von besonderer Wichtigkeit und Bedeutung. Diese kann durch das erfindungsgemäße Verfahren wirkungsvoll unterstützt werden, wobei das sogenannte "frozen shoulder"-Syndrom hier von besonderer Bedeutung ist, da ein derartiges Syndrom keine pathologischen Reibegeräusche erkennen lässt. Epikondylitis bzw. Tennisellenbogen können an höherfrequenten Geräuschen erfolgreich erkannt werden. Ebenso existieren für eine Unzahl von speziellen pathologischen Veränderungen entsprechende Studien und Vergleichsmesswerte. Gelenksblockaden, welche beispielsweise im Fall des Sakroiliacalgelenks zu schmerzhaften Veränderungen führen, lassen sich hierbei, wie andere Blockaden auch, aufgrund fehlender Mikrogeräusche diagnostizieren.

Im Fall von Kniegelenken ist die gleichzeitige Erfassung beider Gelenke besonders vorteilhaft, da gesunde Kniegelenke geringe, unauffällige seitengleiche Bewegungsgeräusche erzeugen, da der physiologische Bewegungswiderstand gering ist. Eine Besonderheit bietet hierbei die Varusfehlstellung (O-Beinstellung), welche eine chronische Überlastung des medialen Meniskus und der medial gelegenen knöchernen Gelenksanteile zur Folge hat. Derartige Fehlstellungen verursachen anfangs oft keine Schmerzen, wobei mit der Deformation der medialen Gelenksanteile im Laufe der Jahre Schmerzen unbemerkt zunehmen. Orthopädische Beratungen werden daher in aller Regel viel zu spät in Anspruch genommen. Schon im Frühstadium kann mit der erfindungsgemäßen Messmethode eine ungleichmäßige Belastung und eine beginnende Genu Varum-Arthrose in Form erhöhter sowie seitendifferenter Bewegungs-Reibegeräusche am medialen und lateralen Gelenksanteil erkannt werden.

Bei der Messung von Sehnensignalen konnte nachgewiesen werden, dass eine Sehnenscheidenentzündung einen erhöhten Sehnenreibewiderstand zur Folge hat, welcher sich im Seitenvergleich auch audiovisuell nachweisen lässt.

## Patentansprüche

1. Verfahren zur Ermittlung von interpretierbaren Daten von physiologischen und pathologischen Geräuschen bzw. Vibrationen von Gelenken, Muskeln oder Sehnen von Menschen oder Tieren, **dadurch gekennzeichnet, dass** ein elektromechanischer Schallwandler an die Geräusch- bzw. Vibrationsquelle herangeführt wird, dass die elektrischen Signale des Wandlers einem Verstärker zugeführt und dass die verstärkten Signale einer Analyse zur Bestimmung der Frequenzen und/oder der Intensität des gemessenen Signals unterworfen werden.

2. Verfahren nach Anspruch 1, **dadurch gekennzeichnet, dass** gemeinsam mit den akustischen Signalen über einen definierten Zeitraum eine Erfassung bzw. Aufzeichnung der Winkelstellung und/oder der Bewegungsrichtung von Gelenken, Muskeln oder Sehnen vorgenommen wird.

3. Verfahren nach Anspruch 1 oder 2, **dadurch gekennzeichnet, dass** die bei der Analyse ermittelten Spektren gespeichert und mit zu verschiedenen Zeitpunkten gespeicherten Spektren verglichen werden.

4. Verfahren nach Anspruch 1, 2 oder 3, **dadurch gekennzeichnet, dass** die vom Schallwandler gelieferten Signale um mehr als 180 dB, vorzugsweise mehr als 200 dB, verstärkt werden und einem Kopfhörer, Lautsprecher und/oder einen Oszilloskop zugeführt werden.

5. Verfahren nach einem der Ansprüche 1 bis 4, **dadurch gekennzeichnet, dass** die gemessenen Daten mit dem von der Person, deren Daten ermittelt wurden, artikulierten Schmerzempfinden verglichen werden.

6. Verfahren nach einem der Ansprüche 1 bis 5, **dadurch gekennzeichnet, dass** die gemessenen Daten in Frequenzgruppen unterteilt ausgewertet werden, wobei Signale bei Frequenzen im hörbaren Niederfrequenzbereich, insbesondere zwischen 16 Hz und 800 Hz, zur weiteren Untersuchung **gekennzeichnet** werden.

7. Vorrichtung zur Durchführung des Verfahrens nach einem der Ansprüche 1 bis 6, **dadurch gekennzeichnet, dass** Körperschallsensoren mit einem Verstärker und/oder einem Frequenzanalysator verbunden sind und dass die Auswertungsergebnisse des Frequenzanalysators als Spektren speicherbar und/oder ausdruckbar sind.

8. Vorrichtung nach Anspruch 7, **dadurch gekennzeichnet, dass** jeweils wenigstens zwei Körperschallsensoren bzw. Mikrophone eingesetzt sind.

9. Vorrichtung nach Anspruch 7 oder 8, **dadurch gekennzeichnet, dass** der Körperschallsensor von Kondensatormikrophonen gebildet ist.

10. Vorrichtung nach Anspruch 7, 8 oder 9, **dadurch gekennzeichnet, dass** die Frequenzanalyse über einen Frequenzbereich von Infraschall bis etwa 10 kHz eingestellt ist.

11. Vorrichtung nach einem der Ansprüche 7 bis 10, **dadurch gekennzeichnet, dass** eine Videokamera vorgesehen ist, deren Signale zeitgleich mit der Messung der Signale der Körperschallsensoren aufgezeichnet und/oder wiedergebbar ist.

12. Vorrichtung nach einem der Ansprüche 5 bis 9, **dadurch gekennzeichnet, dass** die Sensoren einen Frequenzgang zwischen 1 Hz und 10 kHz erfassen.
